(19) **Europäisches Patentamt / European Patent Office / Office européen des brevets**

(11) **EP 2 575 494 B1**

(12) **EUROPEAN PATENT SPECIFICATION**

(45) Date of publication and mention
of the grant of the patent:
**09.04.2014 Bulletin 2014/15**

(51) Int Cl.:
*A23G 9/04* *(2006.01)*    *A23L 1/0526* *(2006.01)*
*A23L 1/054* *(2006.01)*    *A23L 1/0562* *(2006.01)*
*A23G 9/34* *(2006.01)*

(21) Application number: **11722109.3**

(22) Date of filing: **31.05.2011**

(86) International application number:
**PCT/EP2011/058986**

(87) International publication number:
**WO 2011/151345 (08.12.2011 Gazette 2011/49)**

(54) **ICE CONFECTION COMPRISING GELATIN**

EISKONFEKT MIT GELATINE

CONFISERIE GLACEE COMPRENANT DE LA GELATINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2010 EP 10164883**

(43) Date of publication of application:
**10.04.2013 Bulletin 2013/15**

(73) Proprietors:
• **Unilever PLC**
**London, Greater London EC4P 0DY (GB)**
Designated Contracting States:
**CY GB IE MT**
• **Unilever NV**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventor: **JUDGE, David, John**
**Sharnbrook**
**Bedfordshire MK44 1LQ (GB)**

(74) Representative: **Corsten, Michael Allan et al**
**Unilever Patent Group**
**Colworth House**
**Sharnbrook**
**Bedford MK44 1LQ (GB)**

(56) References cited:
**US-A- 4 826 656**

• **DATABASE WPI Week 200935 Thomson
Scientific, London, GB; AN 2009-J02222
XP002604145, & CN 101 416 740 A (INNER
MONGOLIA YILI IND GROUP CO LTD) 29 April
2009 (2009-04-29)**
• **DATABASE WPI Week 200735 Thomson
Scientific, London, GB; AN 2007-368056
XP002604146, & JP 2007 098390 A (SANEIGEN
FFI KK) 19 April 2007 (2007-04-19)**

**Description**

**Technical Field**

This invention relates to ice confections. More particularly, this invention relates to ice confections that do not suffer from unwanted foaming during production.

**Background to Invention**

Ice confections, such as ice lollies, popsides and the like are popular products and are especially enjoyed by children. These products are made from water ice or fruit ice and generally contain low levels of fat.

Ice confections generally also contain stabilisers such as gelatin in order to provide structural stability, acceptable organoleptic properties, and improvements in the melt-down properties of the products. For example, the Slow Melt Popsicle® product (manufactured by Unilever Ice Cream North America) contains standard ice confection ingredients including sugars, fruit juice concentrate, acids and water and further comprises gelatin as a stabiliser.

Ice confections are typically prepared by blending together the dry ingredients which are then added to an aqueous medium under mixing at temperatures of about 75°C following which further liquid ingredients along with flavours and colourings are introduced, again under mixing. This aqueous composition is then mixed further to hydrate the dry ingredients before pasteurisation. Following pasteurisation, the mix is cooled and transferred to ageing tanks where it is held at 5°C, again under agitation, until used. It can be seen that this standard procedure involves substantial mixing of the ingredients throughout the manufacturing process and it has been found that significant foaming occurs, especially in the presence of surface active ingredients such as gelatin. This foaming interferes with the production of ice confections and negatively effects the quality of the product. One approach to reduce the foaming is to reduce the amount of surface active ingredient present but the corollary is that any functionality of such ingredients is also reduced. Alternatively, antifoaming agents such as silicone-based de-foamers can be employed but the use of such additives is not acceptable to consumers and in some countries these agents have even been black-listed. Thus, there is a need for high quality ice confections that retain all the consumer-acceptable characteristics of standard ice confections and that can include surface active ingredients yet that do not suffer from the problem of foaming during production.

**Brief description of the invention**

We have now found that by employing a specific combination of certain stabilisers it is possible to formulate ice confections that do not suffer from foaming during production yet that have excellent palatability and consumer-acceptable characteristics.

Accordingly, in a first aspect, the present invention provides an ice confection comprising at least 0.025 wt % gelatin, and further comprising locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4. Preferably the total amount of locust bean gum in combination with xanthan gum is at least 0.1 wt% of the ice confection, more preferably at least 0.2 wt%. Preferably the total amount of locust bean gum in combination with xanthan gum is at most 0.6 wt% of the ice confection, more preferably at most 0.5 wt%. Preferably the weight ratio of locust bean gum to xanthan gum is at most 2:1, more preferably at most 1.5:1. Preferably the weight ratio of locust bean gum to xanthan gum is at least 1:2, more preferably at least 1:1.5. Preferably the ice confection comprises gelatin in an amount of up to 2 wt%, more preferably up to 1.5 wt%, more preferably still up to 1 wt % most preferably up to 0.5 wt%. Preferably the ice confection comprises gelatin in an amount of at least 0.05 wt%, more preferably at least 0.1 wt%, more preferably still at least 0.2 wt%.

Preferably the ice confection is a water ice.

Preferably the ice confection is a formed around a supporting member.

In a second aspect, the present invention provides a frozen confectionery product comprising the ice confection according to the first aspect.

In a third aspect, the present invention provides a process for the manufacture of the ice confection according to the first aspect comprising:

- preparing an aqueous ice confection mixture comprising at least 0.025 wt % gelatin, and further comprising locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4,
- mixing the aqueous ice confection mixture, and then
- freezing the mixture.

Preferably the freezing is quiescent.

In a fourth aspect, the present invention provides a method of reducing foaming in the production of an ice confection comprising geltine, the method comprising:

- preparing an aqueous ice confection mixture comprising at least 0.025 wt % gelatin, and reducing foaming by including in the mixture locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4,
- mixing the aqueous ice confection mixture, and then
- freezing the mixture.

Preferably the freezing is quiescent.

In a further aspect, the present invention provides a use of a combination of locust bean gum and xanthan gum for reducing foaming in the production of an ice confection.

In another aspect, the present invention provides an ice confection comprising at least 0.025 wt % gelatin, and further comprising locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4 and wherein the ice confection exhibits an overrun of less than 100% while achieving an average time to a first drip of at least 25 minutes.

## Detailed description of the invention

Unless defined otherwise, all technical and scientific terms used herein have the same meaning as commonly understood by one of ordinary skill in the art (e.g. in frozen confectionary manufacture). Definitions and descriptions of various terms and techniques used in frozen confectionary manufacture are found in Ice Cream, 6th Edition, Robert T. Marshall, H. Douglas Goff & Richard W. Hartel (2003), Kluwer Academic/Plenum Publishers.

The term ice confection refers to water ices and fruit ices which can be in various forms including ice lollies, popsides, push-up pops and the like. Since such products are especially enjoyed by children, ice confections are preferably free from alcohol, i.e. non-alcoholic. Ice confections may be unaerated or aerated, but are normally unaerated.

In a preferred embodiment the ice confection is a water ice. The term water ice refers to a sweet tasting substantially fat-free and protein-free fabricated foodstuff intended for consumption in the frozen state (i.e. under conditions wherein the temperature of the foodstuff is less than 0°C, and preferably under conditions wherein the foodstuff comprises significant amounts of ice). By substantially fat and protein free it is meant that the fat content is from 0 to 1 wt%, preferably from 0 to 0.5 wt%, more preferably zero and that the protein content is from 0 to 1 wt%, preferably from 0 to 0.5 wt%, more preferably zero.

In another embodiment the ice confection is a fruit ice. Fruit ices are water ices which contain at least 10% fruit. Fruit means the edible parts of fruit or the equivalent as juice, extracts, concentrated or dehydrated products and so on. Fruit, pulp, juice or any other preparation may be used either fresh or preserved by any convenient technical process.

The term aeration means that gas has been intentionally incorporated into a product to form air cells. The gas can be any gas but is preferably, particularly in the context of food products, a food-grade gas such as air, nitrogen or carbon dioxide. The extent of the aeration can be measured in terms of the volume of the aerated product.

The extent of aeration is typically defined in terms of "overrun". In the context of the present invention, % overrun is defined in volume terms as:

$$\text{Overrun (\%)} = \frac{(\text{ volume of final aerated product} - \text{volume of unaerated mix })}{\text{volume of unaerated mix}} \times 100$$

The amount of overrun present in the ice confections will vary depending on the desired product characteristics but ice confections are normally unaerated.

In the context of this application, foaming refers to the unwanted incorporation of gas into an ice confection during the production process. Foaming is distinct from the intentional incorporation of air into a product. The propensity of an ice confection to suffer from foaming can be determined by whipping the aqueous ice confection mixture and calculating the extent of foaming using the overrun formula above.

A typical preparation process for ice confections involves blending together dry ingredients which are added to an aqueous medium with mixing at elevated temperatures (about 75°C). Other ingredients such as liquid sugars, flavourings and colourings are then added, again under mixing, and the composition is mixed further to hydrate the dry ingredients before pasteurisation. Following pasteurisation, the mix is cooled and transferred to ageing tanks where it is held at about 5°C, under agitation, until it is used. When ice confections contain surface active ingredients (such as gelatine) this process causes a significant amount of agitation and substantial foaming occurs due to the unwanted incorporation of air which interferes with the production of ice confections because the foam particularly forms at the surfaces of the ice confections. Foaming is a particular issue in large-scale manufacture where aqueous ice confection mixes are introduced to moulds using "fill and suck" processes where mixes are pumped into and removed from moulds at high pressures which causes even greater foaming to occur. In addition, foaming also negatively affects the quality of the product because the presence of air cells in the frozen ice confections cause poor appearance insomuch as the products contain air cells and hence do not have the smooth appearance demanded of ice confections and their texture becomes inconsistent and crumbly.

The present invention addresses the problem of foaming in ice confections that contain surface active ingredients by adding a combination of locust bean gum and xanthan gum. We have now found that the combination of locust bean gum and xanthan gum actually prevents foaming. Furthermore, their use in combination in an ice confection also provides products that have excellent characteristics such as taste, texture, slow melt-down and shape retention.

To achieve the appropriate product characteristics, the total amount of locust bean gum in combination with xanthan gum is at least 0.05 wt% more preferably from 0.1 to 0.6 wt%, more preferably still from 0.2 to 0.5 wt%.

The weight ratio of locust bean gum to xanthan gum is from 4:1 to 1:4 to provide the desired antifoaming and organoleptic properties of the product. In further embodiments, the weight ratio is preferably from 2:1 to 1:2, more preferably from 1.5:1 to 1:1.5.

The combination of locust bean gum and xanthan gum is able to prevent foaming even in the presence of relatively high levels of surface active ingredients and so the ice confection preferably contains up to 2 wt% gelatin, more preferably up to 1.5 wt%, more preferably still up to 1 wt %, yet more preferably still up to 0.6 wt%. Preferably the ice confection comprises gelatin in an amount of at least 0.05 wt%, more preferably at least 0.1 wt%.

Ice structuring proteins can be used to provide further improvements to the organoleptic properties of ice confections and therefore in a further embodiment the ice confection may also comprise ice structuring proteins. Ice structuring proteins are proteins that can influence the shape and size of the crystals of ice formed during freezing and also inhibit recrystallisation of ice (Clarke et al., 2002, Cryoletters 23: 89 92; Marshall et al., Ice Cream, 6th Edition, ibid.). Many of these proteins were identfied originally in organisms that live in sub-zero environments and are thought to protect the organism from the deleterious effects of the formation of ice crystals in the cells of the organism. For this reason many ice structuring proteins are also known as antifreeze proteins. An ice structuring protein is defined as a protein that has ice recrystallisation inhibitory activity, as measured by means of the modified splat assay described in WO00/53029.

Popsides and ice lollies are ice confections that include a supporting member to hold a freestanding ice confection. The supporting member can be non-comestible (e.g. a form such as a stick or rod made from non-toxic materials such as plastic or wood) or may also be comestible (e.g. a candy stick). In a preferred embodiment the ice confection is formed around such a supporting member.

The term push-up pop refers to ice confections that are provided within a container that is deformable such that the ice confection may be forced out of the container. In another embodiment the ice confection is in the form of a push-up pop.

Ice confections can be provided alone or can be part of another product and therefore a further aspect of the invention provides an embodiment wherein a frozen confectionery product comprises ice confection according to the invention, for example an ice cream core surrounded by a shell of water ice according to the invention or an ice cream product containing pieces of water ice according to the invention.

Ice confections according to the invention can be produced by preparing an aqueous ice confection mixture comprising gelatin, locust bean gum and xanthan gum, mixing the aqueous ice confection mixture, and then freezing the mixture. Any conventional methods of freezing may be employed but preferably the freezing is quiescent.

As set out above the combination of locust bean gum and xanthan gum provides for a reduction of foaming during the manufacture of ice confections containing gelatine. The invention therefore provides a method of reducing foaming in the production of an ice confection, the method comprising preparing an aqueous ice confection mixture comprising at least 0.025 wt % gelatin, and reducing foaming by including in the mixture locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4. The aqueous ice confection mixture if then mixed, and the mixture is frozen. In a preferred embodiment the freezing is quiescent.

The invention also provides for the use of a combination of locust bean gum and xanthan gum for reducing foaming in the production of an ice confection as set out herein.

Finally, the present invention provides an ice confection containing at least 0.025 wt% gelatine while exhibiting an overrun of less than 100% when whipped at full speed for 1 minute using a Hobart mixer with a balloon whisk attachment. Preferably the overrun is less than 50%, more preferably less than 25%, more preferably still less than 20%.

As set out above, this low level of overrun is achieved by the ice confection further comprising locust bean gum and xanthan gum in a total amount of at least 0.05 wt% of the ice confection and wherein the weight ratio of locust bean gum to xanthan gum is from 4:1 to 1:4. Furthermore, the ice confection also achieves an average time to a first drip of at least 25 minutes.

The present invention will now be further described with reference to the following examples, which are illustrative only and non-limiting.

## Examples

Examples were prepared according to the formulations in Table 1. Formulations A and B are comparative examples. Formulation A was the Slow Melt Popsicle® product (manufactured by Unilever Ice Cream North America). Formulation B was a water ice with a combination of locust bean gum and xanthan gum but that did not contain any surface active ingredients. Formulations 1 to 4 were embodiments according to the invention. The corn syrup was Corn syrup MD40 (Dextrose Equivalent 37.5), manufactured by Cargill (trade name C*Dry GL01934 - DE 37.5). Pear juice concentrate (70 Brix) was manufactured by Valley Processing Inc. Cherry flavour was manufactured by Sensient, the natural cherry flavour was manufactured by International Flavors & Fragrances, and the cherry concentrate (68 Brix) was manufactured by Northwest Packing. Ice Structuring Protein was obtained from Martek Biosciences (ISP spec 5-25g/l).

**Table 1 - Formulations of examples**

| Ingredients (wt%) | Formulations | | | | | |
|---|---|---|---|---|---|---|
| | **A** | **B** | **1** | **2** | **3** | **4** |
| Sucrose | 7.19 | 7.19 | 7.19 | 7.19 | 7.19 | 7.19 |
| Com syrup (Dextrose Equivalent 37.5) | 5.7 | 5.7 | 5.7 | 5.7 | 5.7 | 5.7 |
| Fructose | 5.4 | 5.4 | 5.4 | 5.4 | 5.4 | 5.4 |
| Pear juice concentrate | 1.59 | 1.59 | 1.59 | 1.59 | 1.59 | 1.59 |
| Gelatin | 0.625 | - | 0.1 | 0.2 | 0.3 | 0.4 |
| Locust Bean Gum | - | 0.3 | 0.3 | 0.24 | 0.18 | 0.12 |
| Xanthan Gum | - | 0.2 | 0.2 | 0.16 | 0.12 | 0.08 |
| Citric acid | 0.164 | 0.164 | 0.164 | 0.164 | 0.164 | 0.164 |
| Malic acid | 0.164 | 0.164 | 0.164 | 0.164 | 0.164 | 0.164 |
| Ascorbic acid | 0.0122 | 0.0122 | 0.0122 | 0.0122 | 0.0122 | 0.0122 |
| | | | | | | |
| Beet colour | 0.67 | 0.67 | 0.67 | 0.67 | 0.67 | 0.67 |
| Annatto | 0.0485 | 0.0485 | 0.0485 | 0.0485 | 0.0485 | 0.0485 |
| Cherry flavour | 0.2881 | 0.2881 | 0.2881 | 0.2881 | 0.2881 | 0.2881 |
| Natural cherry flavour | 0.125 | 0.125 | 0.125 | 0.125 | 0.125 | 0.125 |
| Cherry concentrate | 0.225 | 0.225 | 0.225 | 0.225 | 0.225 | 0.225 |
| Ice Structuring Protein | 0.0011 | 0.002 | 0.002 | 0.002 | 0.002 | 0.002 |
| Water | **to 100 %** | **to 100%** | **to 100 %** | **to 100 %** | **to 100 %** | **to 100 %** |

### Mix preparation

The water was heated to 75°C. Each formulation was prepared by blending together the dry ingredients used (Sucrose, corn syrup, fructose, gelatin, locust bean gum, xanthan gum, citric acid, malic acid, and/or ascorbic acid) to aid dispersion and then adding them to the water under shear, followed by the addition of pear juice concentrate. The ingredients were hydrated under shear for 10 minutes prior to pasteurisation at 82°C for 20 seconds. The mix was then rapidly cooled to 5°C and transferred to ageing tanks whereupon the beet colour, annatto, sensient cherry flavour, natural cherry flavour, cherry concentrate and ice structuring protein were added. The mix was then held at 5°C, under agitation. Formulation A was observed to suffer from noticeable foaming during the preparation of the aqueous mix.

Water ice preparation

Metal mini milk moulds were cooled in a glycol bath running at -25°C. The mixes were poured into the metal mini milk moulds (again, formulation A was observed to suffer from noticeable foaming during this step in the process) and once they began to harden sticks were inserted into the products which were then left for a further 30 minutes to quiescently freeze completely. The water ices were removed by placing the moulds in warm water (approx 30°C) such that the outer surface of the water ice melted slightly allowing easy release from the moulds. The water ices were then hardened in a blast freezer at -30°C before being wrapped in wax coated paper bags and stored at -25°C. After the preparation of the water ices it was observed that formulation A contained air cells and did not have the smooth attractive appearance of the other formulations.

Foaming test

Formulations A, B, 1, 2, 3 and 4 were tested for their propensity to foam as follows. 300g of aqueous water ice mixes according to each formulation were prepared as described above and then whipped at full speed for 1 minute using a Hobart mixer with a balloon whisk attachment. The amount of foaming was then measured using the overrun formula above.

Results

### Table 2 - Results of foaming test

| Formulation | % Overrun |
|---|---|
| A | 348 |
| B | 17 |
| 1 | 21 |
| 2 | 62 |
| 3 | 65 |
| 4 | 66 |

As can be seen from the results of the foaming test provided in Table 2, comparative example A (comprising gelatin) suffered from very high foaming whereas formulation B which did not contain any surface active ingredient was over 20 times less prone to foaming. Even though formulations 1 to 4 contained gelatin, the use of locust bean gum and xanthan gum actually made these samples 5 to 20 times less prone to foaming when compared to the comparative example of formulation A. In fact, the lack of foaming in formulation 1 was almost equivalent to formulation B which did not contain any surface active ingredient.

In addition, formulations 1 to 5 were also subjected to tasting tests and were all deemed to have organoleptic properties that were equivalent to the comparative example.

Melt down test

Ice confections are stored at temperatures below 0°C but consumed at ambient temperatures and so are prone to melting during the course of their consumption. Because ice confections are almost exclusively consumed from the hand in the form of ice lollies, popsicles, push-up pops and the like, when the product melts it causes a great deal of mess. Products that melt more slowly and therefore create less mess are therefore very attractive to consumers. Whether a product is a "slow melt" ice confection can be determined by placing it in the same ambient temperature as a comparative, standard ice confection and comparing the time taken for either product to melt sufficiently to cause a drip to fall. Formulations A, B, 1, 2, 3 and 4 were therefore also tested for their propensity to melt down as follows. The water ices were clamped in three different orientations; vertical, horizontal and upside down. Melt down performance was assessed by recording the time taken for the water ices to produce a first drip when left at room temperature in each of the three stick orientations. For each formulation, the average time taken for the first drip to appear was calculated. The results are given in Table 3. In addition, a standard water ice formulation (i.e. one that did not contain gelatin, nor did it contain a combination of locust bean gum and xanthan gum) was tested and found to have an average time to first drip of 16 minutes.

**Table 3 - Results of melt down test**

| Formulation | Average time to first drip (minutes) |
|---|---|
| A | 29 |
| B | 33 |
| 1 | 36 |
| 2 | 36 |
| 3 | 30 |
| 4 | 34 |

As can be seen from the results of the melt down test provided in Table 3, the products according to the invention all had a melt down time that was greater than double that of the standard water ice formulation. In fact, all of the formulations containing the combination of locust bean gum and xanthan gum (formulations B and 1 to 4) actually had better melt down compared to the Slow Melt Popsicle® product of formulation A. It can therefore be readily appreciated that the use of locust bean gum and xanthan gum in combination provides a slow melt ice confection that is comparable to, if not better than, a slow melt ice confection that uses gelatin alone.

Minimum levels of gelatine

**Table 4 - Formulations of examples C-F and results of foaming tests**

| | Formulations | | | |
|---|---|---|---|---|
| Ingredients (wt%) | C | D | E | F |
| Sucrose | 7.19 | 7.19 | 7.19 | 7.19 |
| Com syrup (Dextrose Equivalent 37.5) | 5.7 | 5.7 | 5.7 | 5.7 |
| Fructose | 5.4 | 5.4 | 5.4 | 5.4 |
| Pear juice concentrate | 1.59 | 1.59 | 1.59 | 1.59 |
| Gelatin | 0.01 | 0.025 | 0.05 | 0.1 |
| Locust Bean Gum | - | - | - | - |
| Xanthan Gum | - | - | - | - |
| Citric acid | 0.164 | 0.164 | 0.164 | 0.164 |
| Malic acid | 0.164 | 0.164 | 0.164 | 0.164 |
| Ascorbic acid | 0.0122 | 0.0122 | 0.0122 | 0.0122 |
| | | | | |
| Beet colour | 0.67 | 0.67 | 0.67 | 0.67 |
| Annatto | 0.0485 | 0.0485 | 0.0485 | 0.0485 |
| Cherry flavour | 0.2881 | 0.2881 | 0.2881 | 0.2881 |
| Natural cherry flavour | 0.125 | 0.125 | 0.125 | 0.125 |
| Cherry concentrate | 0.225 | 0.225 | 0.225 | 0.225 |
| Ice Structuring Protein | 0.0011 | 0.0011 | 0.0011 | 0.0011 |

(continued)

| Ingredients (wt%) | Formulations | | | |
|---|---|---|---|---|
| | C | D | E | F |
| Water | to 100 % | to 100 % | to 100 % | to 100 % |
| | | | | |
| % Overrun | 9.8 | 22.7 | 27.2 | 24.6 |

Mixes according to formulations C to F of Table 4 were tested for their propensity to foam as follows. 300g of aqueous water ice mixes according to each formulation were prepared as described above and then whipped at full speed for 1 minute using a Hobart mixer with a balloon whisk attachment. The amount of foaming was then measured using the overrun formula above. The results of the foaming test are given in the last row of Table 4. As can be seen, the presence of gelatine in an amount of at least 0.025wt% causes at least 22% overrun.

Reduction of foaming in mixes containing at least 0.025 wt% gelatine

In order to further investigate the foam-reduction performance of the combination of locust bean gum and xanthan gum, samples according to Table 5 were prepared and tested for their propensity to foam as described above.

**Table 5 - Formulationsof examples and results of foaming tests**

| Ingredients (wt%) | Formulations | | | |
|---|---|---|---|---|
| | 5 | 6 | 7 | G |
| Sucrose | 7.19 | 7.19 | 7.19 | 7.19 |
| Com syrup (Dextrose Equivalent 37.5) | 5.7 | 5.7 | 5.7 | 5.7 |
| Fructose | 5.4 | 5.4 | 5.4 | 5.4 |
| Pear juice concentrate | 1.59 | 1.59 | 1.59 | 1.59 |
| Gelatin | 0.025 | 0.025 | 0.025 | 0.025 |
| Locust Bean Gum | 0.06 | 0.05 | 0.033 | 0.017 |
| Xanthan Gum | 0.04 | 0.025 | 0.017 | 0.008 |
| Citric acid | 0.164 | 0.164 | 0.164 | 0.164 |
| Malic acid | 0.164 | 0.164 | 0.164 | 0.164 |
| Ascorbic acid | 0.0122 | 0.0122 | 0.0122 | 0.0122 |
| | | | | |
| Beet colour | 0.67 | 0.67 | 0.67 | 0.67 |
| Annatto | 0.0485 | 0.0485 | 0.0485 | 0.0485 |
| Cherry flavour | 0.2881 | 0.2881 | 0.2881 | 0.2881 |
| Natural cherry flavour | 0.125 | 0.125 | 0.125 | 0.125 |
| Cherry concentrate | 0.225 | 0.225 | 0.225 | 0.225 |
| Ice Structuring Protein | 0.0011 | 0.0011 | 0.0011 | 0.0011 |
| Water | to 100 % | to 100 % | to 100 % | to 100 % |
| | | | | |
| Total amount of Locust Bean Gum + Xanthan Gum | 0.1 | 0.075 | 0.05 | 0.025 |
| % Overrun | 16.7 | 17.9 | 18.7 | 20.4 |

The results of the foaming test are given in the last row of Table 5. As determined above, the presence of gelatine in an amount of 0.025wt% causes at least 22% overrun. However, the results from samples 5, 6 & 7 show that if locust bean gum in combination with xanthan gum is present in an amount of at least 0.05 wt% then the amount of foaming is reduced to less than 20% overrun.

In summary, it can be readily appreciated that the presence of a combination of locust bean gum and xanthan gum in an amount of at least 0.05 wt% is able to reduce the amount of foaming caused by the presence of surface active agents such as gelatine.

**Claims**

1. An ice confection comprising at least 0.025 wt % gelatine, and further comprising locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4.

2. An ice confection according to claim 1 wherein the total amount of locust bean gum in combination with xanthan gum is at least 0.1 wt% if the ice confection.

3. An ice confection according to claim 1 or claim 2 wherein the weight ratio of locust bean gum to xanthan gum is from 2:1 to 1:2.

4. An ice confection according to any of the preceding claims comprising up to 2 wt% gelatin.

5. An ice confection according to any of the preceding claims wherein the ice confection is a water ice.

6. An ice confection according to any of the preceding claims wherein the ice confection is a formed around a supporting member.

7. A frozen confectionery product comprising ice confection according to any of claims 1 to 6.

8. A process for the manufacture of the product according to claims 1 to 6 comprising:

   - preparing an aqueous ice confection mixture comprising at least 0.025 wt % gelatin, and further comprising locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4,
   - mixing the aqueous ice confection mixture, and then
   - freezing the mixture.

9. A process according to claim 8 wherein the freezing is quiescent.

10. A method of reducing foaming in the production of an ice confection comprising geltine, the method comprising:

    - preparing an aqueous ice confection mixture comprising at least 0.025 wt % gelatin, and reducing foaming by including in the mixture locust bean gum and xanthan gum wherein the total amount of locust bean gum in combination with xanthan gum is at least 0.05 wt% of the ice confection and wherein the weight ratio of locust bean gum to xanthan gum is from 4:1 to 1:4,
    - mixing the aqueous ice confection mixture and then,
    - freezing the mixture.

11. A method according to claim 10 wherein the freezing is quiescent.

12. Use of a combination of locust bean gum and xanthan gum for reducing foaming in the production of an ice confection comprising gelatine.

**Patentansprüche**

1. Eiskonfekt, das mindestens 0,025 Gew.-% Gelatine aufweist und ferner Johannisbrotkernmehl und Xanthangummi aufweist, wobei die Gesamtmenge von Johannisbrotkernmehl plus Xanthangummi mindestens 0,05 Gew.-% des Eiskonfekts beträgt und wobei das Gewichtsverhältnis zwischen Johannisbrotkernmehl und Xanthangummi 4:1 bis 1:4 beträgt.

2. Eiskonfekt nach Anspruch 1,
wobei die Gesamtmenge von Johannisbrotkernmehl plus Xanthangummi mindestens 0,1 Gew.-% des Eiskonfekts beträgt.

3. Eiskonfekt nach Anspruch 1 oder 2,
wobei das Gewichtsverhältnis zwischen Johannisbrotkernmehl und Xanthangummi 2:1 bis 1:2 beträgt.

4. Eiskonfekt nach einem der vorstehenden Ansprüche,
das bis zu 2 Gew.-% Gelatine aufweist.

5. Eiskonfekt nach einem der vorstehenden Ansprüche,
wobei das Eiskonfekt ein Wassereis ist.

6. Eiskonfekt nach einem der vorstehenden Ansprüche,
wobei das Eiskonfekt um ein tragendes Teil herum geformt ist.

7. Gefrorenes Süßwarenprodukt,
das ein Eiskonfekt nach einem der Ansprüche 1 bis 6 umfasst.

8. Verfahren zum Herstellen eines Produktes nach den Ansprüchen 1 bis 6,
das Folgendes aufweist:

   - Herstellen eines wässrigen Gemischs für ein Eiskonfekt, das mindestens 0,025 Gew.-% Gelatine aufweist und ferner Johannisbrotkernmehl und Xanthangummi aufweist, wobei die Gesamtmenge von Johannisbrotkernmehl plus Xanthangummi mindestens 0,05 Gew.-% des Eiskonfekts beträgt und wobei das Gewichtsverhältnis zwischen Johannisbrotkernmehl und Xanthangummi 4:1 bis 1:4 beträgt;
   - Mischen des wässrigen Gemischs für ein Eiskonfekt und anschließend
   - Gefrieren des Gemischs.

9. Verfahren nach Anspruch 8,
wobei das Gefrieren ruhend erfolgt.

10. Verfahren zum Verringern der Schaumbildung bei der Herstellung eines Eiskonfekts, das Gelatine aufweist, wobei das Verfahren Folgendes aufweist:

   - Herstellen eines wässrigen Gemischs für ein Eiskonfekt, das mindestens 0,025 Gew.-% Gelatine aufweist, und Verringern der Schaumbildung, indem in dem Gemisch Johannisbrotkernmehl und Xanthangummi aufgenommen werden, wobei die Gesamtmenge von Johannisbrotkernmehl plus Xanthangummi mindestens 0,05 Gew.-% des Eiskonfekts beträgt und wobei das Gewichtsverhältnis zwischen Johannisbrotkernmehl und Xanthangummi 4:1 bis 1:4 beträgt;
   - Mischen des wässrigen Gemischs für ein Eiskonfekt und anschließend
   - Gefrieren des Gemischs.

11. Verfahren nach Anspruch 10,
wobei das Gefrieren ruhend erfolgt.

12. Verwendung einer Kombination von Johannisbrotkernmehl und Xanthangummi zur Verringerung der Schaumbildung bei der Herstellung von Eiskonfekt, das Gelatine aufweist.

**Revendications**

1. Confiserie de type glace comprenant au moins 0,025 % en poids de gélatine, et comprenant en outre de la gomme de caroube et de la gomme xanthane dans laquelle la quantité totale de gomme de caroube et de gomme xanthane combinées est d'au moins 0,05 % en poids de la confiserie de type glace et dans laquelle le rapport en poids de la gomme de caroube à la gomme xanthane est de 4:1 à 1:4.

2. Confiserie de type glace selon la revendication 1 dans laquelle la quantité totale de gomme de caroube et de gomme xanthane combinées est d'au moins 0,1 % en poids de la confiserie de type glace.

3. Confiserie de type glace selon la revendication 1 ou la revendication 2 dans laquelle le rapport en poids de la gomme de caroube à la gomme xanthane est de 2:1 à 1:2.

4. Confiserie de type glace selon l'une quelconque des revendications précédentes comprenant jusqu'à 2 % en poids de gélatine.

5. Confiserie de type glace selon l'une quelconque des revendications précédentes dans laquelle la confiserie de type glace est un sorbet.

6. Confiserie de type glace selon l'une quelconque des revendications précédentes dans laquelle la confiserie de type glace est formée autour d'un élément de support.

7. Produit de confiserie surgelé comprenant la confiserie de type glace selon l'une quelconque des revendications 1 à 6.

8. Procédé de préparation du produit selon les revendications 1 à 6 comprenant :

- la préparation d'un mélange aqueux pour confiserie de type glace comprenant au moins 0,025 % en poids de gélatine, et comprenant en outre de la gomme de caroube et de la gomme xanthane dans laquelle la quantité totale de gomme de caroube et de gomme xanthane combinées est d'au moins 0,05 % en poids de la confiserie de type glace et dans laquelle le rapport en poids de la gomme de caroube à la gomme xanthane est de 4:1 à 1:4 ;
- l'homogénéisation du mélange aqueux pour confiserie de type glace; puis
- la surgélation du mélange.

9. Procédé selon la revendication 8 dans lequel la surgélation est quiescente.

10. Procédé de réduction de la formation de mousse lors de la production d'une confiserie de type glace comprenant de la gélatine, le procédé comprenant :

- la préparation d'un mélange aqueux pour confiserie de type glace comprenant au moins 0,025 % en poids de gélatine, et la réduction de la formation de mousse par incorporation dans le mélange de gomme de caroube et de gomme xanthane dans laquelle la quantité totale de gomme de caroube et de gomme xanthane combinées est d'au moins 0,05 % en poids de la confiserie de type glace et dans laquelle le rapport en poids de la gomme de caroube à la gomme xanthane est de 4:1 à 1:4 ;
- l'homogénéisation du mélange aqueux pour confiserie de type glace; puis
- la surgélation du mélange.

11. Procédé selon la revendication 10 dans lequel la surgélation est quiescente.

12. Utilisation d'une combinaison de gomme de caroube et de gomme xanthane pour réduire la formation de mousse lors de la production d'une confiserie de type glace comprenant de la gélatine.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0053029 A

**Non-patent literature cited in the description**

- **ROBERT T. MARSHALL ; H. DOUGLAS GOFF ; RICHARD W. HARTEL.** Ice Cream. Kluwer Academic/Plenum Publishers, 2003

- **CLARKE et al.** *Cryoletters,* 2002, vol. 23, 89-92
- **MARSHALL et al.** Ice Cream